# EUROPÄISCHE PATENTSCHRIFT

(11) **EP 4 524 337 B1**
(45) Veröffentlichungstag und Bekanntmachung des Hinweises auf die Patenterteilung: **08.07.2026**
(21) Anmeldenummer: 24197973.1
(22) Anmeldetag: 02.09.2024
(51) Int. Cl.: E03F 7/00, B08B 9/04, F16L 3/18

(54) **SCHACHTUMLENKROLLE**
SHAFT DEFLECTION ROLLER
ROULEAU DE DÉVIATION DE PUITS

(30) Priorität: 13.09.2023 DE 102023124726
(43) Veröffentlichungstag der Anmeldung: 19.03.2025
(73) Patentinhaber: iPEK International GmbH, 87477 Sulzberg (DE)
(72) Erfinder: Wiese, Johannes, 87509 Immenstadt (DE); Becherer, Andreas, 87448 Waltenhofen (DE); Oesterle, Thomas, 6993 Mittelberg (AT); Felder, Sebastian, 6992 Hirschegg (AT); Stoll, Alexander, 88179 Oberreute (DE); Schiebel, Christian, 87616 Marktoberdorf (DE)
(74) Vertreter: 2s-ip Schramm Schneider Bertagnoll Patent- und Rechtsanwälte Part mbB

(56) Entgegenhaltungen:
- CN-U- 218 648 519

## Beschreibung

### Gebiet der Erfindung

Die Erfindung betrifft eine Umlenkvorrichtung zum Umlenken eines langgestreckten biegsamen Formkörpers, etwa eines Schlauches, aus einem Schacht in einen davon abzweigenden Kanal.

### Hintergrund der Erfindung

Umlenkvorrichtungen zum Umlenken eines Schlauches oder eines Kabels aus einem Schacht in einen davon abzweigenden Kanal werden bei Kanalinspektions- und/oder Wartungssystem verwendet, um einerseits eine bessere Führung des Schlauches oder des Kabels zu ermöglichen und um andererseits eine Beschädigung des Schlauches oder des Kabels zu verhindern.

Aus der EP 3 252 242 ist eine Schlauchführung für ein Kanalinspektions- und/oder Wartungssystem zum Umlenken eines zu einer Inspektions- und/oder Wartungseinrichtung führenden Schlauches aus einem Schacht in einen Kanal bekannt. Die Schlauchführung weist einen bestimmten Krümmungsradius, derart, dass ein vorderer Abschnitt der Schlauchführung in den Kanal hineinragt und ein hinterer Abschnitt der Führungseinrichtung in den Schacht hineinragt. Die bananenartige Ausgestaltung der Schlauchführung ermöglicht ein Umlenken des Schlauches, ohne dass der Schlauch im Umlenkbereich die Wandung des Kanals bzw. des Schachtes berührt.

Nachteilig hierbei ist allerdings, dass die bananenartige Schlauchführung im Wesentlichen frei im Schacht hängt, was dazu führen kann, dass die Schlauchführung von dem Schlauch vollständig in den Kanal oder vollständig in den Schacht gezogen wird. Ein sicheres Umlenken, ohne dass der Schlauch die Wandung des Kanals bzw. des Schachtes berührt, kann so nicht immer gewährleistet werden. Steht das Kabel oder der Schlauch nicht unter Zug, kann es zudem vorkommen, dass sich die Schlauchführung auf den Boden des Kanals absetzt. Wird der Schlauch oder das Kabel dann erneut unter Zug gesetzt, muss aufwändig gewährleistet werden, dass die Schlauchführung wieder korrekt im Umlenkbereich positioniert.

Aus der CN 218648519 U ist eine Vorrichtung bekannt, mit der ein Kabelkanal sicher um eine Biegung herumgeführt werden kann. Die Vorrichtung umfasst zwei Verbindungsstücke, die an beiden Enden des Biegeabschnitts des Kabelkanals befestigt sind. Die Verbindungsstücke weisen jeweils eine Verbindungsstange auf, die an einer Schnittstelle durch Stiftwellen drehbar miteinander verbunden sind. An den beiden Verbindungsstangen sind Drehknöpfe mit einer Durchgangsbohrung angeordnet. Über eine Schraubstange sind die Drehknöpfe miteinander gekoppelt. Mittels der Schraubstange kann der Abstand der beiden Drehknöpfe und damit der Winkel zwischen den beiden Verbindungsstangen eingestellt werden.

### Aufgabe der Erfindung

Aufgabe der Erfindung ist es daher, eine Lösung bereitzustellen, mit der insbesondere ein Schlauch oder ein Kabel einfach und gleichzeitig sicher von einem Schacht in einen davon abzweigenden Kanal umgelenkt werden kann.

### Erfindungsgemäße Lösung

Gelöst wird diese Aufgabe mit einer Umlenkvorrichtung zum Umlenken eines langgestreckten biegsamen Formkörpers aus einem Schacht in einen davon abzweigenden Kanal nach dem unabhängigen Anspruch. Vorteilhafte Ausgestaltungen der Erfindung sind in den abhängigen Ansprüchen angegeben.

Bereitgestellt wird demnach eine Umlenkvorrichtung zum Umlenken eines langgestreckten biegsamen Formkörpers aus einem Schacht in einen davon abzweigenden Kanal, wobei die Umlenkvorrichtung aufweist
- einen ersten Spreizarm und einen zweiten Spreizarm, wobei die beiden Spreizarme in einem ersten Gelenkpunkt gelenkig miteinander verbunden sind, und
- einen ersten Spreizhebel und einen zweiten Spreizhebel, wobei die beiden Spreizhebel in einem zweiten Gelenkpunkt gelenkig miteinander verbunden sind,
wobei
- der erste Spreizhebel mit seinem freien Ende in einem ersten Anlenkpunkt gelenkig mit dem ersten Spreizarm verbunden ist, wobei der erste Anlenkpunkt zwischen dem ersten Gelenkpunkt und dem freien Ende des ersten Spreizarms am ersten Spreizarm angeordnet ist,
- der zweite Spreizhebel mit seinem freien Ende in einem zweiten Anlenkpunkt gelenkig mit dem zweiten Spreizarm verbunden ist, wobei der zweite Anlenkpunkt zwischen dem ersten Gelenkpunkt und dem freien Ende des zweiten Spreizarms am zweiten Spreizarm angeordnet ist, und
- im Bereich des freien Endes des ersten Spreizarms eine drehbar gelagerte Umlenkrolle angeordnet ist.

Vorteilhaft ist es, wenn die Position des ersten Anlenkpunktes am ersten Spreizarm, die Position des zweiten Anlenkpunktes am zweiten Spreizarm, die Länge des ersten Spreizhebels und die Länge des zweite Spreizhebels derart aufeinander abgestimmt sind, dass eine Vergrößerung des von den beiden Spreizhebeln eingeschriebenen ersten Winkels eine Vergrößerung des von den beiden Spreizarmen eingeschriebenen zweiten Winkels bewirkt.

In einer Ausgestaltung der Erfindung kann im Bereich des zweiten Gelenkpunktes ein Zugmittel, insbesondere Zugseil, Stange, Rohr oder teleskopierbares Rohr, befestigt sein, mit dem der Bereich des zweiten Gelenkpunktes mit einer in Richtung des ersten Gelenkpunktes wirkenden Zugkraft beaufschlagbar ist, wobei durch Beaufschlagung des Bereiches des zweiten Gelenkpunktes mit der Zugkraft der Abstand zwischen dem zweiten Gelenkpunkt und dem ersten Gelenkpunkt verkleinert wird.

Zwischen dem ersten Gelenkpunkt und dem zweiten Gelenkpunkt kann in einer alternativen Ausgestaltung der Erfindung ein auf den ersten Gelenkpunkt und den zweiten Gelenkpunkt wirkendes Stellmittel angeordnet sein, mit dem der Abstand zwischen dem ersten Gelenkpunkt und dem zweiten Gelenkpunkt veränderbar ist.

Das Stellmittel kann ein Hydraulikzylinder, ein Pneumatikzylinder oder eine Spindel sein.

An mindestens einem der Spreizarme und/oder an mindestens einem der Spreizhebel können Anschlagmittel angeordnet sein, die eine Vergrößerung des von den beiden Spreizhebeln eingeschriebenen ersten Winkels über den Totpunkt der Spreizhebel hinaus verhindern. Die Anschlagmittel können beispielsweise als Zapfen ausgestaltet sein.

Vorteilhaft kann es sein, wenn die beiden Spreizarme im Bereich ihrer Endabschnitte an den Außenseiten eine geriffelte, zumindest aber eine raue Oberfläche aufweisen. Alternativ oder zusätzlich kann an den Außenseiten dieser Endabschnitte auch ein rutschhemmendes und vorzugsweise abriebfestes Material vorgesehen bzw. angeordnet sein, etwa ein Gummi.

Die geriffelte Oberfläche kann von querverlaufenden Rillen oder einen Sägezahnprofil gebildet werden.

An dem freien Ende zumindest eines Spreizarmes kann ein Haken angeordnet sein, der vorzugsweise in einem rechten Winkel von dem Spreizarm absteht.

Zumindest ein Spreizarm kann zwei zueinander beabstandete und miteinander gekoppelte Segmente aufweist, wobei die Umlenkrolle zwischen den beiden Segmenten angeordnet ist. Die Segmente sind hierbei im Wesentlichen parallel zueinander angeordnet.

Vorteilhaft kann es sein, wenn radial außerhalb der Umlenkrolle und in einem bestimmten Abstand zur Umlenkrolle zumindest ein Führungsmittel vorgesehen ist, wobei zwischen dem Führungsmittel und der Umlenkrolle der langgestreckte biegsame Formkörper führbar ist. Die Führungsmittel können mit einer in Richtung zur Umlenkrolle wirkenden Federkraft beaufschlagt sein.

Vorteilhaft kann es sein, wenn den beiden Spreizarmen und/oder den beiden Spreizhebeln ein Arretiermittel zugeordnet ist, mit dem die Spreizarme und/oder die Spreizhebel in einer vorbestimmten Stellung zueinander arretierbar sind. Die Spreizarme und/oder die Spreizhebel können so in einem gespreizten Zustand arretiert werden, um zu verhindern, dass die sich der Winkel zwischen den Spreizarmen und/oder der Winkel zwischen den Spreizhebeln selbstständig ändert. Dadurch wird es ermöglicht, dass die Umlenkvorrichtung, wenn sie im Schacht bzw. Kanal fixiert worden ist, in diesem gespreizten Zustand verbleibt.

Gemäss dem Verfahren zum Umlenken ist der Formkörper ein Schlauch, insbesondere Hochdruckschlauch, oder ein Kabel.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: eine erfindungsgemäße Umlenkvorrichtung in einer perspektivischen Ansicht und in einer Seitenansicht, in einem gespreizten Zustand;
- Fig. 2: eine erfindungsgemäße Umlenkvorrichtung in einer perspektivischen Ansicht und in einer Seitenansicht, in einem nicht-gespreizten (zusammengeklappten) Zustand;
- Fig. 3: einen Ausschnitt der erfindungsgemäßen Umlenkvorrichtung in einer perspektivischen Ansicht und in einer Seitenansicht;
- Fig. 4: eine Seitenansicht der erfindungsgemäßen Umlenkvorrichtung; und
- Fig. 5: eine in einem Schacht/Kanal angeordnete erfindungsgemäße Umlenkvorrichtung.

### Detaillierte Beschreibung der Erfindung

Die erfindungsgemäße Lösung ermöglicht es, die Umlenkvorrichtung am Schachtgrund zu fixieren. Dadurch wird eine sichere, definierte und reibungsarme Führung eines Kabels oder eines Schlauches während einer Kanalinspektion- und/oder Wartung gewährleistet, selbst dann, wenn der Schlauch / das Kabel nicht unter Zug stehen. Ein weiterer Vorteil ist, dass die Umlenkvorrichtung für unterschiedliche Durchmesser des Schachtes verwendet werden kann und dennoch eine sichere Fixierung gewährleistet ist.

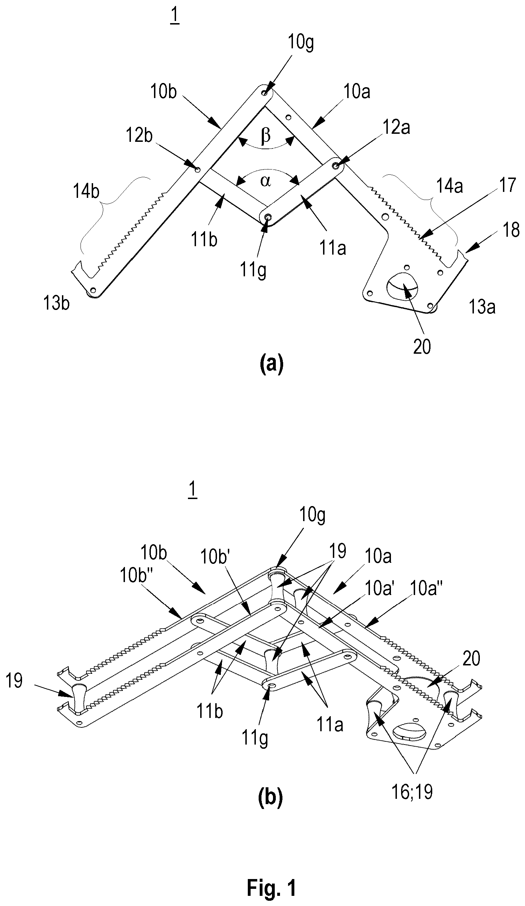

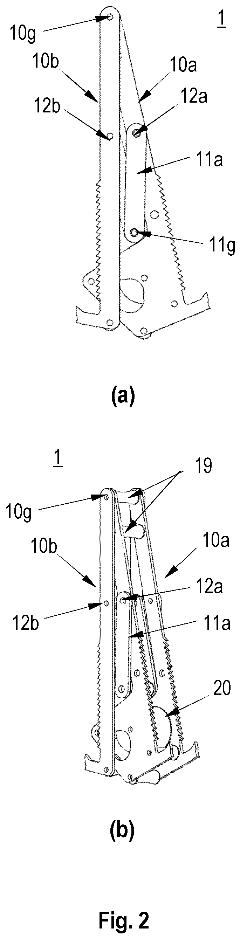

**Fig. 1** und **Fig. 2** zeigen eine erfindungsgemäße Umlenkvorrichtung 1 in einer Seitenansicht (Abbildung (a)) und in einer perspektivischen Ansicht (Abbildung (b)), wobei die Umlenkvorrichtung in Fig. 1 in einem gespreizten Zustand und in Fig. 2 in einem nicht-gespreizten Zustand gezeigt ist.

Die Umlenkvorrichtung 1 weist zwei Spreizarme auf, nämlich einen ersten Spreizarm 10a und einen zweiten Spreizarm 10b. Die beiden Spreizarme 10a, 10b sind in einem ersten Gelenkpunkt 10g gelenkig miteinander verbunden, d.h. der Winkel β zwischen den beiden Spreizarmen 10a, 10b ist veränderbar, sodass die beiden Spreizarme 10a, 10b in eine gespreizte Stellung (wie in Fig. 1 gezeigt) und in eine nicht-gespreizte (zusammengeklappte) Stellung (wie in Fig. 2 gezeigt) gebracht werden können.

Zwischen den beiden Spreizarmen 10a, 10b ist eine Art Spreiz- bzw. Hebelmechanismus angeordnet, mit dem das Spreizen der Spreizarme 10a, 10b bewerkstelligt wird. Dieser Spreiz- bzw. Hebelmechanismus umfasst, einen Spreizhebel 11a und einen zweiten Spreizhebel 11b, wobei die beiden Spreizhebel 11a, 11b in einem zweiten Gelenkpunkt 11g gelenkig miteinander verbunden sind, derart, dass ein Winkel α zwischen den beiden Spreizhebel 11a, 11b verändert werden kann.

Der erste Spreizhebel 11a ist mit seinem freien Ende in einem ersten Anlenkpunkt 12a gelenkig mit dem ersten Spreizarm 10a verbunden ist und der zweite Spreizhebel 11b ist mit seinem freien Ende in einem zweiten Anlenkpunkt 12b gelenkig mit dem zweiten Spreizarm 10b verbunden. Dadurch wird eine Art Scherenmechanismus gebildet, mit dem die Spreizarme 10a, 10b in die gespreizte Stellung oder in die nicht-gespreizte Stellung gebracht werden können.

Hierbei ist der erste Anlenkpunkt 12a zwischen dem ersten Gelenkpunkt 10g und dem freien Ende 13a des ersten Spreizarms 10a am ersten Spreizarm 10a angeordnet. Der zweite Anlenkpunkt 12b ist zwischen dem ersten Gelenkpunkt 10g und dem freien Ende 13b des zweiten Spreizarms 10b am zweiten Spreizarm 10b angeordnet. Die Spreizarme 10a, 10b und die Spreizhebel 11a, 11b schreiben damit eine Raute ein, dass sie zusammen den vorstehend genannten Scherenmechanismus bilden.

Durch eine Veränderung des von den beiden Spreizhebeln 11a, 11b eingeschriebenen Winkels α verändert sich auch der von den beiden Spreizarmen 10a, 10b eingeschriebene Winkel β, wodurch (je nach Veränderung des Winkels β) die Spreizarme 10a, 10b in die gespreizte Stellung oder in die nicht-gespreizte Stellung gebracht werden.

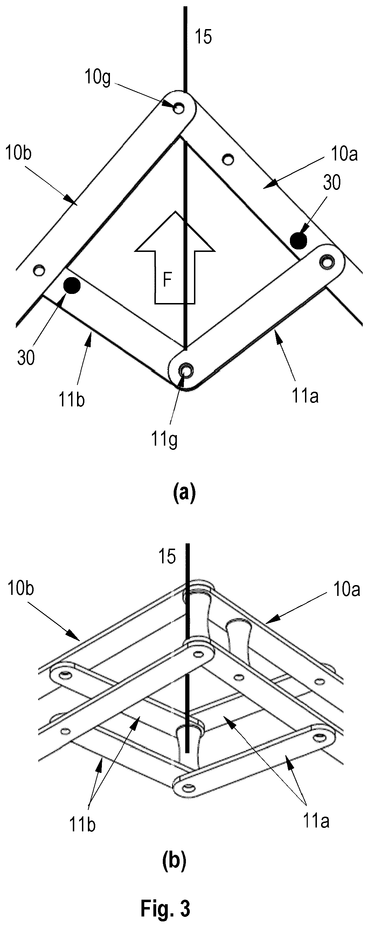

Vorteilhaft ist es aber, wenn
- die Position des ersten Anlenkpunktes 12a am ersten Spreizarm 10a,
- die Position des zweiten Anlenkpunktes 12b am zweiten Spreizarm 10b,
- die Länge des ersten Spreizhebels 11a und
- die Länge des zweite Spreizhebels 11b
derart aufeinander abgestimmt sind, dass eine Vergrößerung des von den beiden Spreizhebeln 11a, 11b eingeschriebenen Winkels α eine Vergrößerung des von den beiden Spreizarmen 10a, 10b eingeschriebenen zweiten Winkels β bewirkt, wie es in Fig. 1 gezeigt ist. Dadurch wird insbesondere bei Verwendung eines Zugseils, wie mit Bezug auf Fig. 3 beschrieben, ein sicheres Spreizen der beiden Spreizarmen 10a, 10b gewährleistet.

Die beiden Spreizarme 10a, 10b weisen im Bereich ihrer Endabschnitte 14a, 14b an den Außenseiten eine geriffelte Oberfläche 17 auf. Die geriffelte Oberfläche 17 kann von querverlaufenden Rillen oder einem Sägezahnprofil gebildet werden.

Wenn sich die Umlenkvorrichtung im gespreizten Zustand im Schachtboden befindet, kann so ein Verrutschen der Umlenkvorrichtung verhindert werden. Andere Ausgestaltungen der Außenseiten der Endabschnitte 14a, 14b sind aber möglich - so können die Außenseiten der Endabschnitte 14a, 14b beispielsweise ein rutschhemmendes Material, etwa ein Gummi aufweisen.

An dem freien Ende 13a des Spreizarms 10a ist ein Haken 18 angeordnet, der hier in einem rechten Winkel von dem Spreizarm nach außen absteht. Der Haken kann genutzt werden, ein Inspektions- und/oder Wartungsgerät zusammen mit der Umlenkvorrichtung 1 in den Kanal abzulassen. Dadurch können ansonsten zwei getrennte Arbeitsschritte zu einem Arbeitsschritt kombiniert werden. In gleicher Weise kann das Gerät mit diesem Haken zusammen mit der Umlenkvorrichtung 1 wieder aus dem gezogen werden. Ein entsprechender Haken kann zusätzlich oder alternativ auch an dem freien Ende 13b des zweiten Spreizarms 10b vorgesehen sein.

Wie in den Abbildungen (b) ersichtlich weist zumindest ein Spreizarm 10a, 10b zwei zueinander beabstandete und miteinander gekoppelte Segmente 10a'; 10a"; 10b'; 10b" auf, wobei die Umlenkrolle 20 zwischen den beiden Segmenten angeordnet ist. Bei der in Fig. 1und Fig. 2 gezeigten Ausgestaltung der Erfindung weisen beide Spreizarme 10a, 10b entsprechende Segmente auf, wobei hier zwischen den beiden Segmenten 10a'; 10a" des ersten Spreizarms 10a die Umlenkrolle angeordnet ist.

Die Segmente 10a'; 10a" bzw. 10b'; 10b" eines Spreizarms 10a, 10b sind hier im Wesentlichen identisch ausgestaltet und parallel zueinander angeordnet und werden mittels dazwischen angeordneter Abstandshalter 19 auf Abstand gehalten. Entsprechend können auch die Spreizhebel 11a, 11b jeweils aus zwei identisch ausgestalteten und parallel zueinander angeordneten Segmenten bestehen, die mittels Abstandshalter 19 auf Abstand gehalten werden.

Ein Abstandshalter 19 ist hier im Bereich des ersten Gelenkpunktes 10g der Spreizarme angeordnet, und kann damit gleichzeitig auch die Funktion einer Gelenkachse für die beiden Spreizarme übernehmen oder eine zwischen den Spreizarmen verlaufende Gelenkachse aufnehmen.

Ein weiterer Abstandshalter 19 ist hier im Bereich des zweiten Gelenkpunktes 11g der Spreizhebel angeordnet, und kann damit gleichzeitig auch die Funktion einer Gelenkachse für die beiden Spreizhebel übernehmen oder eine zwischen den Spreizhebeln verlaufende Gelenkachse aufnehmen.

Der Abstand der Segmente 10a'; 10a" des ersten Spreizarms 10a ist kleiner als der Abstand der Segmente 10b'; 10b" des zweiten Spreizarms 10b (oder umgekehrt). Dadurch kann der erste Spreizarm beim Zusammenklappen in den zweiten Spreizarm eingreifen, sodass eine sehr kompakte Form der Umlenkrolle in der zusammengeklappten Stellung erreicht werden kann.

Im Bereich des freien Endes 13a des ersten Spreizarms 10a ist eine drehbar gelagerte Umlenkrolle 20 angeordnet. Diese Umlenkrolle kann alternativ auch an dem freien Ende 13b des zweiten Spreizarms 10b angeordnet sein. In einer noch weiteren alternativen Ausgestaltung können auch zwei Umlenkrollen vorgesehen sein, wobei sowohl an dem freien Ende 13b des zweiten Spreizarms 10b als auch an dem freien Ende 13a des ersten Spreizarms 10a jeweils eine Umlenkrolle angeordnet ist. Die Umlenkrolle kann als Zylinder ausgestaltet sein, der auf einer Welle drehbar gelagert ist. Andere Ausgestaltungen der Umlenkrolle 20 sind möglich.

Radial außerhalb der Umlenkrolle 20 und in einem bestimmten Abstand zur Umlenkrolle kann ein erstes Führungsmittel 16a vorgesehen sein (zu sehen insbesondere in Abbildung (b) von Fig. 1). Das erste Führungsmittel 16a verläuft quer zwischen den beiden Segmenten 10a', 10a" des ersten Spreizarms 10a. In einer Ausgestaltung der Erfindung kann das erste Führungsmittel 16a auch durch einen Abstandshalter 19 gebildet werden. Das erste Führungsmittel 16a gewährleistet, dass ein Kabel oder ein Schlauch auch im unbelasteten Zustand weitgehend an der Umlenkrolle anliegt (wobei "weitgehend" in diesem Zusammenhang bedeutet, dass sich das Kabel / der Schlauch im unbelasteten Zustand über einen bestimmten Abstand hinaus von der Umlenkrolle entfernt).

Zusätzlich kann ein zweites Führungsmittel 16b vorgesehen sein, das ebenfalls radial außerhalb der Umlenkrolle 20 und in einem bestimmten Abstand zur Umlenkrolle angeordnet ist, und quer zwischen den beiden Segmenten 10a', 10a" des ersten Spreizarms 10a verläuft. Damit kann ein Kabel / ein Schlauch noch besser an der Umlenkrolle gehalten werden und besser um die Umlenkrolle geführt werden. Das zweite Führungsmittel 16b kann ebenfalls durch einen Abstandshalter 19 gebildet werden.

In einer Ausgestaltung der Erfindung können das ersten Führungsmittel 16a und/oder das zweite Führungsmittel 16b als drehbar gelagerte Führungsmittel ausgestaltet sein.

In einer noch weiteren Ausgestaltung der Erfindung können das erste Führungsmittel 16a und/oder das zweite Führungsmittel 16b mit einer Kraft (z.B. Federkraft) beaufschlagt sein, die das jeweilige Führungsmittel in Richtung der Umlenkrolle 20 drückt. Ein zwischen der Umlenkrolle den Führungsmitteln verlaufendes Kabel bzw. oder ein Schlauch werden so gegen die Führungsrolle gedrückt. Dadurch kann noch besser gewährleistet werden, dass ein Kabel oder ein Schlauch zu jeden exakt und sicher um die Umlenkrolle geführt wird.

Die Führungsmittel können gleichzeitig auch die Funktion der vorstehend genannten Abstandshalter übernehmen.

**Fig. 3** zeigt einen Ausschnitt der erfindungsgemäßen Umlenkvorrichtung in einer Seitenansicht (Abbildung (a)) und in einer perspektivischen Ansicht (Abbildung (b)), zur Verdeutlichung der Funktionsweise der erfindungsgemäßen Umlenkvorrichtung.

Im Bereich des zweiten Gelenkpunktes 11g kann ein Zugmittel 15 befestigt sein, mit dem der Bereich des zweiten Gelenkpunktes 11g mit einer in Richtung des ersten Gelenkpunktes 10g wirkenden Zugkraft F beaufschlagt werden kann. Das Zugmittel kann ein Seil (Zugseil) oder ein teleskopierbares Rohr oder eine Stange sein. Das Zugmittel ist, wenn die Umlenkvorrichtung in dem Schacht angeordnet ist, aus den Schacht herausgeführt, sodass eine Person an der Oberfläche das Zugmittel 15 betätigen kann.

Wird das Zugmittel nach oben gezogen, wird der Bereich des zweiten Gelenkpunktes 11g mit einer nach oben gerichteten und damit in Richtung des ersten Gelenkpunktes 10g wirkenden Zugkraft F beaufschlagt, wie durch den Pfeil angedeutet. Dadurch wird der Abstand zwischen dem zweiten Gelenkpunkt 11g und dem ersten Gelenkpunkt 10g verkleinert (die in Fig. 1 gezeigten Winkel α und β werden vergrößert), was ein Spreizen der beiden Spreizarme 10a, 10b bewirkt.

Wird das Zugmittel wieder abgelassen, kehrt sich der Vorgang um (die in Fig. 1 gezeigten Winkel α und β verkleinern sich) und die beiden Spreizarme 10a, 10b werden wieder zusammengeklappt.

Das Zugmittel kann in einer Ausgestaltung der Erfindung direkt an dem Abstandshalter 19 befestigt sein, der im Bereich des zweiten Gelenkpunktes 11g angeordnet ist bzw. die Gelenkachse der Spreizhebel 11a, 11b bildet.

In einer alternativen, in den Figuren nicht gezeigten Ausgestaltung der Erfindung kann zwischen dem ersten Gelenkpunkt 10g und dem zweiten Gelenkpunkt 11g ein auf den ersten Gelenkpunkt 10g und den zweiten Gelenkpunkt 11g wirkendes Stellmittel 16 angeordnet sein. Das Stellmittel ist hierbei ausgestaltet, den Abstand zwischen dem ersten Gelenkpunkt 10g und dem zweiten Gelenkpunkt 11g zu verändern, wobei eine Änderung dieses Abstandes dieselbe Wirkung hat wie vorstehend für das Zugseil beschrieben. Das Stellmittel kann beispielsweise ein Hydraulikzylinder, Pneumatikzylinder oder eine Spindel sein. Erfindungsgemäß kann jedes Stellmittel verwendet werden, mit dem der Abstand zwischen dem ersten Gelenkpunkt 10g und dem zweiten Gelenkpunkt 11g verändert werden kann.

Vorteilhaft ist es, wenn an mindestens einem der Spreizarme 10a, 10b und/oder an mindestens einem der Spreizhebel 11a, 11b Anschlagmittel 30 angeordnet sind, die eine Vergrößerung des von den beiden Spreizhebeln 11a, 11b eingeschriebenen ersten Winkels α über den Totpunkt der Spreizhebel 11a, 11b hinaus verhindern. Der Abstand zwischen den beiden Gelenkpunkten 10g und 11g kann so einen bestimmten Wert nicht unterschreiten. Dadurch wird verhindert, dass beim Ablassen des Zugmittels 15 die beiden Spreizarme 10a, 10b in ihrer gespreizten Stellung verbleiben, weil sich der Abstand zwischen den beiden Gelenkpunkten 10g und 11g nicht wieder vergrößert. Des Weiteren wird dadurch verhindert, dass beim Überschreiten des Totpunktes die beiden Spreizarme 10a, 10b aufgrund ihres Gewichtes und ihrer Hebelwirkung selbständig zusammenklappen.

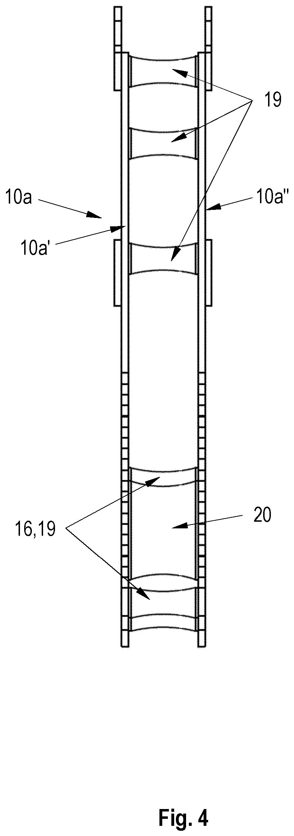

**Fig. 4** zeigt eine Seitenansicht der erfindungsgemäßen Umlenkvorrichtung, wobei hier lediglich der in den Fig. 1 und Fig. 2 gezeigte Spreizarm 10a gezeigt ist.

Erkennbar sind die parallel angeordneten Segmente 10a', 10a" des Spreizarms 10a und die zwischen den beiden Segmenten angeordneten Abstandshalter 19 sowie die am freien Ende des Spreizarms 10a angeordnete Umlenkrolle, die zwischen den beiden Segmenten 10a', 10a" drehbar gelagert ist.

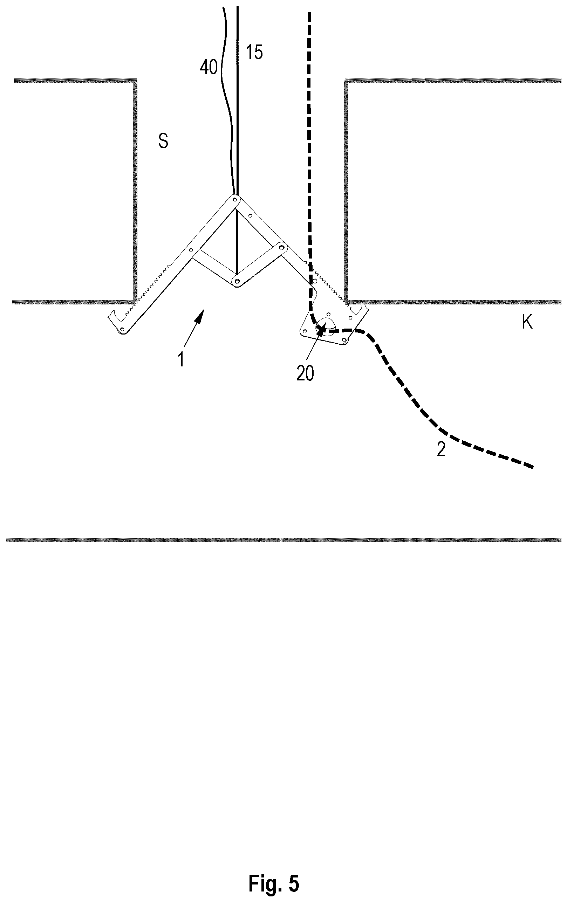

**Fig. 5** zeigt eine in einem Schacht S / Kanal K angeordnete erfindungsgemäße Umlenkvorrichtung 1.

Die Umlenkvorrichtung befindet sich hier in einer gespreizten Stellung. Die beiden Endabschnitte 14a, 14b der Spreizarme 10a, 10b liegen an der Übergangskante zwischen Schacht und Kanal an. Aufgrund der Zugkraft F des Zugmittels 15 (hier ist ein Zugseil gezeigt) werden die beiden Endabschnitte der Spreizarme gegen diese Übergangskante gedrückt und verhindert so, dass die Umlenkvorrichtung aufgrund der Zugkraft wieder aus dem Schacht gezogen wird. Die Umlenkvorrichtung befindet sich so in einer in dem Schacht verspreizten Stellung, bei der ein Kabel oder ein Schlauch sicher um die Umlenkrolle der Umlenkvorrichtung geführt werden kann. Die Führungsmittel 16a und/oder 16b verhindern, dass ein Kabel / ein Schlauch im Bereich der Führungsrolle nach unten durchhängen.

Wird das Zugmittel entspannt, klappen die beiden Spreizarme 10a, 10b zusammen und die Umlenkvorrichtung kann mit einem Ablassseil 40 aus dem Schacht gezogen werden.

Exemplarisch ist hier der Verlauf eines Schlauches 2 bzw. eines Kabels 2 durch die Umlenkvorrichtung bzw. um die Umlenkrolle als gepunktete Linie gezeigt.

### Bezugszeichen

- 1: Umlenkvorrichtung (Schachtumlenkrolle)
- 2: Formkörper (Schlauch oder Kabel)
- 10a, 10b: Spreizarme
- 10a', 10a" 10b', 10b": Segmente der Spreizarme
- 10g: erster Gelenkpunkt der Spreizarme
- 11a, 11b: Spreizhebel
- 11g: zweiter Gelenkpunkt der Spreizhebel
- 12a, 12b: Anlenkpunkte
- 13a, 13b: freie Enden der Spreizarme
- 14a, 14b: Endabschnitt der Spreizarme
- 15: Zugmittel, z.B. Zugseil
- 16: Führungsmittel
- 17: geriffelte Oberfläche
- 18: Haken
- 19: Abstandshalter zwischen den Segmenten 10a', 10a" bzw. 10b', 10b"
- 20: Umlenkrolle
- 30: Anschlagmittel
- 40: Ablassseil
- α: von den beiden Spreizhebeln eingeschriebener erster Winkel
- β: von den beiden Spreizarmen eingeschriebener zweiter Winkel
- F: auf den ersten Gelenkpunkt 10g wirkende Zugkraft
- K: Kanal
- S: Schacht

## Patentansprüche

1. Umlenkvorrichtung (1) zum Umlenken eines langgestreckten biegsamen Formkörpers (2) aus einem Schacht (S) in einen davon abzweigenden Kanal (K), wobei die Umlenkvorrichtung aufweist
- einen ersten Spreizarm (10a) und einen zweiten Spreizarm (10b), wobei die beiden Spreizarme (10a; 10b) in einem ersten Gelenkpunkt (10g) gelenkig miteinander verbunden sind, und
- einen ersten Spreizhebel (11a) und einen zweiten Spreizhebel (11b), wobei die beiden Spreizhebel (11a; 11b) in einem zweiten Gelenkpunkt (11g) gelenkig miteinander verbunden sind,
wobei
- der erste Spreizhebel (11a) mit seinem freien Ende in einem ersten Anlenkpunkt (12a) gelenkig mit dem ersten Spreizarm (10a) verbunden ist, wobei der erste Anlenkpunkt (12a) zwischen dem ersten Gelenkpunkt (10g) und dem freien Ende (13a) des ersten Spreizarms (10a) am ersten Spreizarm (10a) angeordnet ist,
- der zweite Spreizhebel (11b) mit seinem freien Ende in einem zweiten Anlenkpunkt (12b) gelenkig mit dem zweiten Spreizarm (10b) verbunden ist, wobei der zweite Anlenkpunkt (12b) zwischen dem ersten Gelenkpunkt (10g) und dem freien Ende (13b) des zweiten Spreizarms (10b) am zweiten Spreizarm (10b) angeordnet ist, und
- im Bereich des freien Endes (13a) des ersten Spreizarms (10a) eine drehbar gelagerte Umlenkrolle (20) angeordnet ist.

2. Umlenkvorrichtung nach dem vorhergehenden Anspruch, wobei die Position des ersten Anlenkpunktes (12a) am ersten Spreizarm (10a), die Position des zweiten Anlenkpunktes (12b) am zweiten Spreizarm (10b), die Länge des ersten Spreizhebels (11a) und die Länge des zweite Spreizhebels (11b) derart aufeinander abgestimmt sind, dass eine Vergrößerung des von den beiden Spreizhebeln (11a; 11b) eingeschriebenen ersten Winkels (α) eine Vergrößerung des von den beiden Spreizarmen (10a; 10b) eingeschriebenen zweiten Winkels (β) bewirkt.

3. Umlenkvorrichtung nach einem der vorhergehenden Ansprüche, wobei im Bereich des zweiten Gelenkpunktes (11g) ein Zugmittel (15), insbesondere Zugseil oder teleskopierbares Rohr, befestigt ist, mit dem der Bereich des zweiten Gelenkpunktes (11g) mit einer in Richtung des ersten Gelenkpunktes (10g) wirkenden Zugkraft (F) beaufschlagbar ist, wobei durch Beaufschlagung des Bereiches des zweiten Gelenkpunktes (11g) mit der Zugkraft (F) der Abstand zwischen dem zweiten Gelenkpunkt (11g) und dem ersten Gelenkpunkt (10g) verkleinert wird.

4. Umlenkvorrichtung nach einem der vorhergehenden Ansprüche 1 oder 2, wobei zwischen dem ersten Gelenkpunkt (10g) und dem zweiten Gelenkpunkt (11g) ein auf den ersten Gelenkpunkt (10g) und den zweiten Gelenkpunkt (11g) wirkendes Stellmittel angeordnet ist, mit dem der Abstand zwischen dem ersten Gelenkpunkt (10g) und dem zweiten Gelenkpunkt (11g) veränderbar ist.

5. Umlenkvorrichtung nach dem vorhergehenden Anspruch, wobei das Stellmittel ein Hydraulikzylinder, Pneumatikzylinder oder eine Spindel ist.

6. Umlenkvorrichtung nach einem der vorhergehenden Ansprüche, wobei an mindestens einem der Spreizarme (10a; 10b) und/oder an mindestens einem der Spreizhebel (11a; 11b) Anschlagmittel (30) angeordnet sind, die eine Vergrößerung des von den beiden Spreizhebeln (11a; 11b) eingeschriebenen ersten Winkels (α) über den Totpunkt der Spreizhebel (11a; 11b) hinaus verhindern.

7. Umlenkvorrichtung nach einem der vorhergehenden Ansprüche, wobei die beiden Spreizarme (10a; 10b) im Bereich ihrer Endabschnitte (14a; 14b) an den Außenseiten eine geriffelte Oberfläche (17) aufweisen.

8. Umlenkvorrichtung nach dem vorhergehenden Anspruch, wobei die geriffelte Oberfläche (17) von querverlaufenden Rillen oder einen Sägezahnprofil gebildet wird.

9. Umlenkvorrichtung nach einem der vorhergehenden Ansprüche, wobei an dem freien Ende (13a; 13b) zumindest eines Spreizarmes (10a; 10b) ein Haken (18) angeordnet ist, der vorzugsweise in einem rechten Winkel von dem Spreizarm absteht.

10. Umlenkvorrichtung nach einem der vorhergehenden Ansprüche, wobei zumindest ein Spreizarm der Spreizarme (10a; 10b) zwei zueinander beabstandete und miteinander gekoppelte Segmente (10a'; 10a"; 10b'; 10b") aufweist, wobei die Umlenkrolle (20) zwischen den beiden Segmenten angeordnet ist.

11. Umlenkvorrichtung nach einem der vorhergehenden Ansprüche, wobei radial außerhalb der Umlenkrolle (20) und in einem bestimmten Abstand zur Umlenkrolle ein Führungsmittel (16a; 16b) vorgesehen ist, wobei zwischen dem Führungsmittel und der Umlenkrolle der langgestreckte biegsame Formkörper (2) führbar ist.

12. Verfahren zum Umlenken eines langgestreckten biegsamen Formkörpers (2) aus einem Schacht (S), wobei zum Umlenken eine Umlenkvorrichtung nach einem der Ansprüche 1 bis 11 benutzt wird und wobei der Formkörper (2) ein Schlauch oder ein Kabel ist.

## Claims

1. A deflection device (1) for deflecting an elongate, flexible shaped body (2) from a shaft (S) into a channel (K) branching off therefrom, wherein the deflection device comprises
- a first spreading arm (10a) and a second spreading arm (10b), wherein the two spreading arms (10a; 10b) are hinged together at a first hinge point (10g), and
- a first spreading lever (11a) and a second spreading lever (11b), wherein the two spreading levers (11a; 11b) are hinged together at a second hinge point (11g),
wherein
- the first spreader lever (11a) is connected to the first spreader arm (10a) via its free end at a first pivot point (12a), wherein the first pivot point (12a) is arranged on the first spreader arm (10a) between the first pivot point (10g) and the free end (13a) of the first spreader arm (10a),
- the second spreader lever (11b) is connected at its free end via a second pivot point (12b), the second pivot point (12b) being arranged on the second spreader arm (10b) between the first pivot point (10g) and the free end (13b) of the second spreader arm (10b), and
- a rotatably mounted deflection pulley (20) is arranged in the region of the free end (13a) of the first spreader arm (10a).

2. The deflection device according to the preceding claim, wherein the position of the first pivot point (12a) on the first spreader arm (10a), the position of the second pivot point (12b) on the second spreader arm (10b), the length of the first spreader lever (11a) and the length of the second spreader lever (11b) are coordinated in such a way that an increase in the first angle (α) subtended by the two spreader levers (11a; 11b) causes an increase in the second angle (β) inscribed by the two spreader arms (10a; 10b).

3. The deflection device according to any one of the preceding claims, wherein a tensioning member (15), in particular a tension cable or a telescopic tube, is secured in the region of the second pivot point (11g), by means of which the region of the second pivot point (11g) can be subjected to a tensile force (F) acting in the direction of the first pivot point (10g), whereby applying the tensile force (F) to the region of the second pivot point (11g) reduces the distance between the second pivot point (11g) and the first pivot point (10g).

4. The deflection device according to any one of the preceding claims 1 or 2, wherein an actuating means acting on the first pivot point (10g) and the second pivot point (11g) is arranged between the first pivot point (10g) and the second pivot point (11g), by means of which the distance between the first pivot point (10g) and the second pivot point (11g) can be varied.

5. The deflection device according to the preceding claim, wherein the actuating means is a hydraulic cylinder, a pneumatic cylinder or a spindle.

6. The deflection device according to any one of the preceding claims, wherein stop means (30) are arranged on at least one of the spreader arms (10a; 10b) and/or on at least one of the spreader levers (11a; 11b) are stop means (30) which prevent an increase in the first angle (α) inscribed by the two spreader levers (11a; 11b) beyond the dead centre of the spreader levers (11a; 11b).

7. The deflection device according to any one of the preceding claims, wherein the two spreader arms (10a; 10b) have a ribbed surface (17) on the outer sides in the region of their end sections (14a; 14b).

8. The deflection device according to the preceding claim, wherein the ribbed surface (17) is formed by transverse grooves or a sawtooth profile.

9. The deflection device according to any one of the preceding claims, wherein a hook (18) is arranged at the free end (13a; 13b) of at least one spreader arm (10a; 10b) has a hook (18) arranged thereon, which preferably projects at a right angle from the spreader arm.

10. The deflection device according to any one of the preceding claims, wherein at least one of the spreader arms (10a; 10b) comprises two segments (10a; 10a"; 10b"; 10b"), the deflection pulley (20) being arranged between the two segments.

11. The deflection device according to any one of the preceding claims, wherein a guide means (16a; 16b) is provided radially outside the deflection roller (20) and at a specific distance from the deflection roller, wherein the elongated flexible shaped body (2) can be guided between the guide means and the deflection roller.

12. A method for redirecting an elongated flexible foreign body (2) from a shaft (S), wherein a redirecting device according to any one of claims 1 to 11 is used for the redirection, and wherein the shaped body (2) is a hose or a cable.

## Revendications

1. Dispositif de déviation (1) destiné à dévier un corps moulé flexible allongé (2) d'un puits (S) vers un canal (K) qui en est une dérivation, le dispositif de déviation comprenant
- un premier bras d'écartement (10a) et un deuxième bras d'écartement (10b), les deux bras d'écartement (10a ; 10b) étant reliés de manière articulée l'un à l'autre en un premier point d'articulation (10g), et
- un premier levier d'écartement (11a) et un deuxième levier d'écartement (11b), les deux leviers d'écartement (11a ; 11b) étant reliés de manière articulée l'un à l'autre en un deuxième point d'articulation (11g),
dans lequel
- le premier levier d'écartement (11a) est relié de manière articulée au premier bras d'écartement (10a) par son extrémité libre au niveau d'un premier point d'articulation (12a), le premier point d'articulation (12a) est disposé sur le premier bras d'écartement (10a) entre le premier point d'articulation (10g) et l'extrémité libre (13a) du premier bras d'écartement (10a),
- le deuxième levier d'écartement (11b) est relié de manière articulée par son extrémité libre, en un deuxième point d'articulation (12b) sur le deuxième bras d'écartement (10b), le deuxième point d'articulation (12b) étant situé sur le deuxième bras d'écartement (10b) entre le premier point d'articulation (10g) et l'extrémité libre (13b) de celui-ci, et
- une poulie de renvoi (20) montée de manière rotative est disposée dans la zone de l'extrémité libre (13a) du premier bras d'écartement (10a).

2. Dispositif de renvoi selon la revendication précédente, dans lequel la position du premier point d'articulation (12a) sur le premier bras d'écartement (10a), la position du deuxième point d'articulation (12b) sur le deuxième bras d'écartement (10b), la longueur du premier levier d'écartement (11a) et la longueur du deuxième levier d'écartement (11b) sont coordonnées de telle sorte qu'une augmentation du premier angle (α) inscrit par les deux leviers d'écartement (11a ; 11b) entraîne une augmentation du deuxième angle (β) inscrit par les deux bras d'écartement (10a ; 10b).

3. Dispositif de renvoi selon l'une des revendications précédentes, dans lequel un moyen de traction (15), en particulier un câble de traction ou un tube télescopique, est fixé dans la zone du deuxième point d'articulation (11g), grâce auquel la zone du deuxième point d'articulation (11g) peut être soumise à une force de traction (F) agissant en direction du premier point d'articulation (10g), l'application de la force de traction (F) à la zone du deuxième point d'articulation (11g) réduisant la distance entre le deuxième point d'articulation (11g) et le premier point d'articulation (10g).

4. Dispositif de renvoi selon l'une des revendications 1 ou 2 précédentes, dans lequel est disposé, entre le premier point d'articulation (10g) et le deuxième point d'articulation (11g), un moyen de réglage agissant sur le premier point d'articulation (10g) et le deuxième point d'articulation (11g), grâce auquel la distance entre le premier point d'articulation (10g) et le deuxième point d'articulation (11g) est modifiable.

5. Dispositif de renvoi selon la revendication précédente, dans lequel le moyen de réglage est un vérin hydraulique, un vérin pneumatique ou une vis.

6. Dispositif de renvoi selon l'une des revendications précédentes, dans lequel des moyens de butée (30) sont disposés sur au moins l'un des bras d'écartement (10a ; 10b) et/ou sur au moins l'un des leviers d'écartement (11a ; 11b) sont disposés des moyens de butée (30) qui empêchent une augmentation du premier angle (α) inscrit par les deux leviers d'écartement (11a ; 11b) au-delà du point mort des leviers d'écartement (11a ; 11b).

7. Dispositif de renvoi selon l'une des revendications précédentes, dans lequel les deux bras d'écartement (10a ; 10b) présentent, au niveau de leurs parties d'extrémité (14a ; 14b), une surface striée (17) sur leurs faces extérieures.

8. Dispositif de renvoi selon la revendication précédente, dans lequel la surface striée (17) est formée par des rainures transversales ou un profil en dents de scie.

9. Dispositif de renvoi selon l'une des revendications précédentes, dans lequel un crochet (18) est disposé à l'extrémité libre (13a ; 13b) d'au moins un bras d'écartement (10a ; 10b) est disposé un crochet (18) qui s'étend de préférence à angle droit par rapport au bras d'écartement.

10. Dispositif de renvoi selon l'une des revendications précédentes, dans lequel au moins un des bras d'écartement (10a ; 10b) comporte deux segments (10a' ; 10a" ; 10b' ; 10b"), la poulie de renvoi (20) étant disposée entre les deux segments.

11. Dispositif de renvoi selon l'une des revendications précédentes, dans lequel un moyen de guidage (16a ; 16b) est prévu radialement à l'extérieur de la poulie de renvoi (20) et à une distance déterminée de celle-ci, le corps moulé flexible allongé (2) pouvant être guidé entre le moyen de guidage et la poulie de renvoi.

12. Procédé pour dévier un corps étranger flexible allongé (2) hors d'un puits (S), dans lequel on utilise, pour la déviation, un dispositif de déviation selon l'une des revendications 1 à 11 et dans lequel le corps moulé (2) est un tuyau ou un câble.
